# EUROPÄISCHE PATENTSCHRIFT

(11) **EP 0 547 062 B1**
(45) Veröffentlichungstag und Bekanntmachung des Hinweises auf die Patenterteilung: **23.11.1994**
(21) Anmeldenummer: 91913307.4
(22) Anmeldetag: 22.07.1991
(51) Int. Cl.: E04H 6/24

(54) **FLURPARKER FÜR KRAFTFAHRZEUGE**
VEHICLE-PARKING SYSTEM
SYSTEME DE PARCAGE DE VEHICULES A MOTEUR

(30) Priorität: 08.09.1990 DE 4028592
(43) Veröffentlichungstag der Anmeldung: 23.06.1993
(73) Patentinhaber: OTTO WÖHR GMBH, 70825 Korntal-Münchingen (DE)
(72) Erfinder: MAUCH, Michael, D-7251 Wimsheim (DE)
(74) Vertreter: Hoeger, Stellrecht & Partner
(86) Internationale Anmeldenummer: EP9101370
(87) Internationale Veröffentlichungsnummer: WO9204518

(56) Entgegenhaltungen:
- EP-A- 0 232 725
- FR-A- 1 244 432

## Beschreibung

Die Erfindung betrifft einen Flurparker für Kraftfahrzeuge mit einer Anzahl von Parkpaletten, die auf senkrecht zueinander gerichteten, in einer Ebene angeordneten Fahrbahnen verschiebbar sind und jeweils einen eigenen Antrieb aufweisen, der die Parkpaletten bewegende Rollen antreibt.

Derartige Parkpaletten mit eigenem Antrieb haben den Vorteil, daß sie unabhängig voneinander längs der Fahrbahnen bewegbar sind, so daß die Verschiebung der Parkpaletten insgesamt schneller erfolgen kann als bei Parkpaletten, die über einen externen Antrieb verschoben werden. Andererseits ist man bestrebt, außer dem Antrieb möglichst wenige Steuer- und Getriebeelemente auf den einzelnen parkpaletten unterzubringen, da dies die Kosten der Parkpaletten erheblich vergrößern und gegebenenfalls auch die Störanfälligkeit des gesamten Flurparkers erhöhen könnte.

So ist beispielsweise aus der FR-A-1 244 432 bekannt, Parkpaletten der eingangs beschriebenen Art selektiv längs senkrecht zueinander verlegter Schienen dadurch zu verschieben, daß an der Unterseite der Parkpaletten die Antriebe und die angetriebenen Rollen der einen Fahrtrichtung relativ zu den anderen höhenverstellbar sind. Dazu sind getrennte Antriebe für die senkrecht zueinander gerichteten Rollen notwendig, außerdem müssen dazu ganze Fahrgestell-Baugruppen verschiebbar gelagert werden.

Es ist Aufgabe der Erfindung, ausgehend von diesem Stand der Technik den Rollenantrieb für die Parkpaletten zu vereinfachen.

Diese Aufgabe wird bei einem Flurparker der eingangs beschriebenen Art erfindungsgemäß dadurch gelöst, daß der Antrieb gleichzeitig Rollen für senkrecht zueinander angeordnete Fahrtrichtungen antreibt und daß längs der Fahrbahnen Schienen angeordnet sind, die wahlweise mit den Rollen der einen oder der anderen, senkrecht dazu verlaufenden Fahrtrichtung in Eingriff bewegbar sind.

Diese Rollen können Reibrollen sein, es können aber auch Ketten- oder Zahnräder verwendet werden, wobei dann die Schienen entsprechend als Reibschiene, als ausgespannte Ketten oder als Zahnstangen ausgebildet sind. Wesentlich ist, daß diese Schienen, die jeweils parallel zu den Fahrtrichtungen verlaufen, wahlweise mit den angetriebenen Rollen in Eingriff gebracht werden können, so daß beim Drehen der Rollen diese die Parkpaletten entweder in einer ersten Fahrtrichtung verschieben oder in einer senkrecht dazu verlaufenden zweiten Fahrtrichtung, je nachdem, ob die zur ersten oder die zur zweiten Fahrtrichtung parallele Schiene mit den angetriebenen Rollen der Parkpalette in Eingriff gebracht wird.

Die Schienen können beispielsweise seitlich an horizontal angeordnete Rollen angelegt werden, wobei die Parkpaletten dann beispielsweise über Kugeln, die ähnlich einem Kugellager in einem Käfig geführt sind, auf dem Parkdeck ablaufen und in ihrer Fahrtrichtung durch die angelegten Schienen geführt werden.

Bei einem besonders bevorzugten Ausführungsbeispiel ist jedoch vorgesehen, daß die Rollen die Parkpaletten tragen und daß die Rollen jeweils einer Fahrtrichtung auf den Schienen dieser Fahrtrichtung aufsitzen. Den angetriebenen Tragrollen der Parkpaletten werden also jeweils nur die Schienen einer Fahrtrichtung angeboten, so daß trotz des Antriebs aller Rollen an einer Parkpalette trotzdem die Parkpalette nur in einer der beiden möglichen Richtungen verfahren wird.

Besonders vorteilhaft ist es dabei, wenn die Schienen einer Fahrtrichtung gegenüber den Schienen der senkrecht dazu verlaufenden Fahrtrichtung uber deren Lauffläche anhebbar und unter deren Lauffläche absenkbar sind. Durch diese Hubbewegung der Schienen der einen Fahrtrichtung kann entweder diese Schiene oder die jeweils senkrecht dazu verlaufende Schiene mit den Rollen der Parkpalette in Eingriff gebracht werden, so daß auf diese Weise die Fahrtrichtungsauswahl erfolgt. Selbstverständlich wäre es auch möglich, die Schienen beider Fahrtrichtungen höhenverschiebbar auszugestalten, so daß dann jeweils nur die in der höheren Position angeordnete Schiene mit den Antriebsrollen im Eingriff steht.

Es ist vorteilhaft, wenn mindestens eine von zwei sich kreuzenden Schienen im Kreuzungsbereich eine Einschnürung der Lauffläche aufweist, in welche die andere Schiene hineinragt, und wenn zumindest die hineinragende Schiene im Kreuzungsbereich unterbrochen ist. Dies führt dazu, daß trotz der Kreuzung die Lücke zwischen zwei aneinandergrenzenden Schienenstücken einer Schiene entweder ganz überbrückt oder zumindest in ihrer Breite verringert wird, so daß die Laufrollen auch im Kreuzungsbereich eine im wesentlichen durchgehende Lauffläche antreffen.

Besonders bevorzugt ist es, wenn beide Schienen im Kreuzungsbereich unterbrochen sind und sich in Richtung auf den Kreuzungspunkt keilförmig verjüngende Laufflächen aufweisen, wobei die Spitzen der Laufflächen bis an den Kreuzungspunkt heranreichen.

Bei dieser Ausgestaltung ergeben sich trotz unterschiedlicher Höhe der sich kreuzenden Schienen praktisch keine Lücken in der Lauffläche.

Bei dieser Lösung ist allerdings die Tragfähigkeit der Schienen im Kreuzungsbereich reduziert. Dies kann unerwünscht sein, insbesondere dann, wenn die Schienen nicht massiv ausgebildet sind, sondern aus Profilblechen geformt sind.

In diesem Falle ist es günstig, wenn die Laufflächen von zwei sich kreuzenden Schienen jeweils vor dem Kreuzungsbereich enden und wenn im Kreuzungsbereich eine höhenverstellbare Brücke angeordnet ist, die jeweils auf das Niveau der Lauffläche der höher positionierten der beiden sich kreuzenden Schienen verschoben ist. Eine solche Brücke kann sehr stabil ausgebildet sein und die Lücke zwischen den Laufflächen der sich kreuzenden Schienen ausfüllen, wobei die Brücke sich jeweils an die Lauffläche der höher angeordneten Schiene anschließt.

Diese Brücke kann einen eigenen Antrieb zur Höhenverstellung haben, besonders günstig ist es aber, wenn die höhenverschiebbare Schiene Mitnehmer zur Höhenverstellung der Brücke aufweist. Es ist dann kein eigener Antrieb für die Brücke notwendig, sondern die Verschiebung der Brücke erfolgt durch die Verschiebung der höhenverschiebbaren Schiene selbst.

Da diese höhenverschiebbare Schiene aus einer Position oberhalb der stationären Schiene in eine Position unterhalb der stationären Schiene verschiebbar ist, ist es vorteilhaft, wenn die Mitnehmer zum Anheben der Brücke an dieser nur anliegen, wenn die höhenverstellbare Schiene mit ihrer Lauffläche auf dem Niveau der Lauffläche der kreuzenden Schiene oder darüber positioniert ist. Wenn also die verschiebbare Schiene unter das Niveau der stationären Schiene abgesenkt wird, wird die Brücke nicht durch die Mitnehmer verschoben, sondern die Brücke bleibt dann auf dem Niveau der stationären Schiene. Insgesamt erfährt also die Brücke bei ihrer Verschiebung eine geringere Verschiebbewegung als die höhenverschiebbare Schiene, da die Brücke nicht unter das Niveau der stationären Schiene angesenkt wird.

Es kann vielmehr günstig sein, wenn die Brücke in ihrer tiefsten Stellung auf einem Stützlager aufruht, so daß sie in dieser Position auch große Lasten tragen kann.

Bei der besonders bevorzugten Ausführungsform ist vorgesehen, daß die Brücke in der höhenverstellbaren Schiene höhenverschieblich in einer Reibschlußführung gelagert ist. Dabei können Endanschläge zur Begrenzung der Verschiebung der Brücke gegenüber der höhenverstellbaren Schiene vorgesehen sein.

Zur Energieversorgung des auf den Parkpaletten mitgeführten Antriebsmotors können prinzipiell einseitig mit der Parkpalette und am anderen Ende mit einer stationären Energieversorgung verbundene Versorgungsleitungen verwendet werden, es ist aber wesentlich vorteilhafter, wenn parallel zu den Schienen Stromschienen verlaufen, an denen mindestens ein an jeder Parkpalette gehaltener Stromabnehmer anliegt. Auf diese Weise kann auf Versorgungsleitungen verzichtet werden, so daß die Parkpaletten über das gesamte Parkdeck frei verfahrbar sind.

Dabei kann vorgesehen sein, daß die Stromschienen im Kreuzungsbereich mit den Schienen unterbrochen sind und daß Hebevorrichtungen vorgesehen sind, die die Stromabnehmer an diesen Unterbrechungen von der Stromschiene abheben und danach wieder auf die Stromschiene aufsetzen.

Die Hebevorrichtungen können bei dem ersten bevorzugten Ausführungsbeispiel ortsfeste Führungen sein, an denen die Stromabnehmer der Parkpaletten beim Verschieben zumindest während eines Teils des Verschiebeweges anliegen. Diese Führungen sind so geformt, daß sie im Kreuzungsbereich die Stromabnehmer abheben.

Bei einer weiteren bevorzugten Ausführungsform ist vorgesehen, daß die Hebevorrichtungen an den Paletten zwischen einer Absenkposition und einer Anhebeposition dauerhaft verstellbar sind und ein Betätigungsglied für die Verstellung aufweisen, welches durch die Verschiebebewegung der Palette durch ein ortsfestes Eingriffelement aktivierbar ist. Bei dieser Lösung wird also jeweils dann, wenn eine Palette an einem ortsfesten Eingriffelement vorbeibewegt wird, das Betätigungsglied aktiviert, daß dann bei jeder Aktivierung den Stromabnehmer entweder abhebt oder absenkt. Der Stromabnehmer verbleibt bis zur nächsten Aktivierung des Betätigungsgliedes in der jeweiligen Position.

Beispielsweise kann die Hebevorrichtung ein drehbar an der Palette gelagerter Exzenter sein, das Betätigungsglied ein den Exzenter vedrehendes Zahnrad und das Eingriffselement ein ortsfestes Zahnstangenstück, das bei jedem Eingriff des Zahnrades den Exzenter von einer Extremstellung in eine andere verdreht. Ein wesentlicher Vorteil dieser Lösung liegt darin, daß das ortsfeste Eingriffselement bei einer solchen Konstruktion in verschiedener Richtung sehr kurz ausgebildet sein kann, während eine Hebevorrichtung mit einer längs der Fahrbahn angeordneten Führung zumindest so lang sein muß, wie der Bereich, in dem der Stromabnehmer während des Überfahrens einer kreuzenden Schiene abgehoben werden muß.

Im Überkreuzungsbereich werden die Stromabnehmer über die Lücke in den Stromschienen hinübergehoben. Um dabei keine Unterbrechung der Stromversorgung in Kauf nehmen zu müssen, weist bei einem bevorzugten Ausführungsbeispiel jede Palette mindestens zwei an derselben Stromschiene anliegende Stromabnehmer auf, deren Abstand voneinander größer ist als die Unterbrechung der Stromschienen im Kreuzungsbereich mit einer Schiene. Dadurch ist gewährleistet, daß auch bei dem Abheben eines Stromabnehmers beim Überfahren einer Schiene der jeweils andere Stromabnehmer an der Stromschiene anliegt und die Ener- gieversorgung des Antriebs unterbrechungslos aufrechterhält.

Die Stromschienen der verschiedenen Fahrtrichtungen können auf demselben Niveau ortsfest angeordnet sein, wobei die Stromabnehmer federnd oder unter der Wirkung des Eigengewichts gegen die Stromschienen angedrückt werden.

Bei einer besonders bevorzugten Ausführungsform ist jedoch vorgesehen, daß den Stromschienen der beiden senkrecht zueinander verlaufenden Fahrtrichtungen verschiedene Stromabnehmer an jeder Parkpalette zugeordnet sind und daß die Stromschienen zusammen mit den parallelen Fahrschienen wahlweise mit den Stromabnehmern der einen oder der anderen Fahrtrichtung in Eingriff bringbar sind. Vorzugsweise sind mit den anhebbaren bzw. absenkbaren Fahrschienen parallel laufende Stromschienen fest verbunden, so daß auch diese Stromschienen bei der Auswahl der entsprechenden Fahrtrichtung mit angehoben und mit abgesenkt werden. Dies führt dazu, daß beim Wechsel der Fahrtrichtung auch ein Wechsel der an einem Stromabnehmer der Parkpalette anliegenden Stromschiene erfolgt, die Stromversorgung erfolgt also bei dieser Lösung immer nur durch die Stromabnehmer, die der parallel zur Fahrtrichtung verlaufenden Stromschiene zugeordnet sind, während die für die senkrecht dazu verlaufenden Stromschienen vorgesehenen Stromabnehmer keinen Kontakt mit den quer verlaufenden Stromschienen haben. Dies kann ausgenutzt werden, um palettenseitig festzustellen, welche Fahrtrichtung vorgewählt ist. Dazu wird auf der Parkpalette über eine Diskriminatorschaltung festgestellt, an welchem Stromabnehmer eine Versorgungsspannung anliegt, und dies erzeugt ein Signal, das jeweils die gewünschte Fahrtrichtung repräsentiert.

Die nachfolgende Beschreibung bevorzugter Ausführungsbeispiele eines Flurparkers dient im Zusammenhang mit der Zeichnung der weiteren Erläuterung. Es zeigen:
- Fig. 1:: in perspektivischer Darstellung einen Flurparker mit einem Parkdeck, das Schienen aufweist, auf denen Automobile tragende Paletten verschiebbar sind,
- Fig. 2:: von oben gesehen einen Ausschnitt aus der auf dem Parkdeck angebrachten Schienenanlage und die an der Unterseite einer Palette angebrachten Bewegungs- und Stromzuführungselemente,
- Fig. 3:: im Querschnitt der in der Fig. 2 gezeigte Ausschnitt aus der Schienenanlage und eine darüber abgestellte Palette von der Seite gesehen
- Fig. 4/5:: ein Detail aus der in Fig. 3 gezeigten Darstellung, wobei die im Querschnitt gezeigte Schiene einmal höher (Fig. 4) und einmal tiefer (Fig. 5) als die in Seitenansicht gezeigte Schiene verläuft;
- Fig. 6:: eine Darstellung des Bewegungsablaufs beim Heben eines Stromabnehmers über die Kreuzung zweier Schienen mit einer ortsfesten Anhebeführung für den Stromabnehmer;
- Fig. 7:: eine Ansicht ähnlich Fig. 6 bei einer abgewandelten Ausführungsform einer Hebevorrichtung mit Exzenter, Zahnrad und ortsfestem Zahnstangenstück;
- Fig. 8:: eine perspektivische Ansicht eines bevorzugten Ausführungsbeispiels einer Schienenkreuzung mit einer im Kreuzungsbereich angeordneten, höhenverstellbaren Brücke:
- Fig. 9:: eine Schnittansicht längs Linie 9-9 in Fig. 8 beim Anheben der höhenverstellbaren Schiene von der unteren in die obere Position;
- Fig. 10:: eine Ansicht ähnlich Fig. 9 kurz vor Erreichen der oberen Position der höhenverstellbaren Schiene;
- Fig. 11:: eine Ansicht ähnlich Fig. 9 beim Absenken der höhenverstellbaren Schiene und
- Fig. 12:: eine Ansicht ähnlich Fig. 9 mit der höhenverstellbaren Schiene kurz vor Erreichen der tiefsten Position.

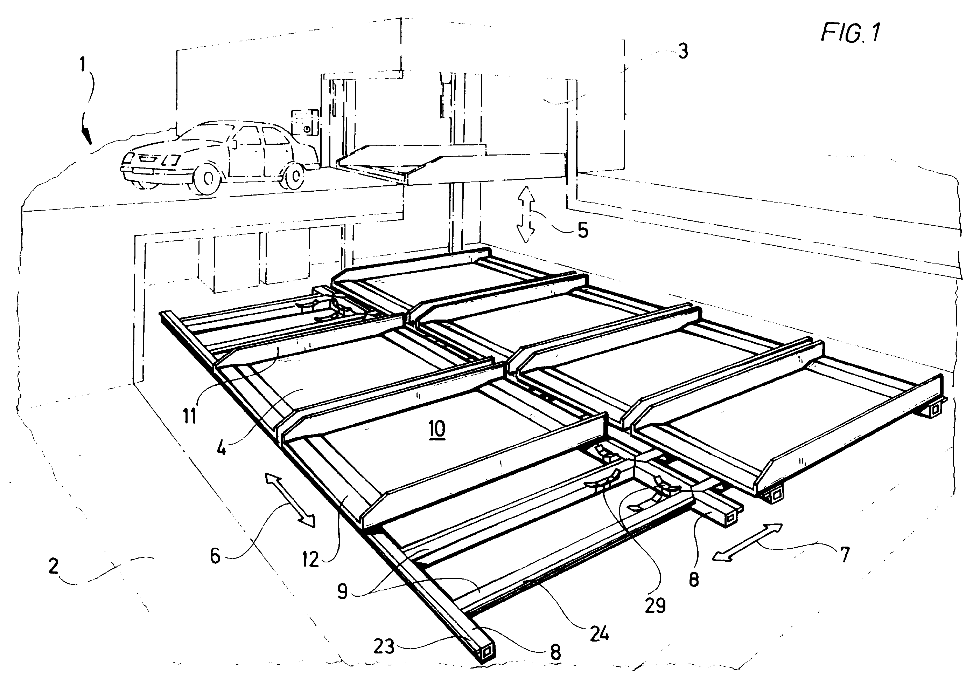

Der in der Fig. 1 gezeigte Flurparker 1 weist ein unter Straßenniveau liegendes Parkdeck 2 auf. Zum Flurparker gehört ein Aufzug 3 zum Transportieren von Parkpaletten 4 in der vertikalen Richtung 5, beispielsweise vom Niveau der Straße auf das des Parkdecks 2.

Das Parkdeck 2 weist Parkpositionen in einer Matrixanordnung mit Zeilen und Kolonnen auf. Jede Parkposition ist so groß, daß eine Parkpalette 4 für je ein Automobil darauf Platz findet. Zum Verschieben der Parkpaletten sind zueinander senkrecht verlaufende Schienenpaare 8 bzw. 9 vorhanden. In jeder Parkposition kreuzen sich je ein Schienenpaar 8 und 9. Auf den Schienen lassen sich die Parkpaletten senkrecht oder parallel zu ihrer Längsachse in die Querrichtung 6 bzw. in die Längsrichtung 7 verschieben. Während die Schienenpaare 8 auf einem festgelegten einheitlichen Niveau liegen, können - was der Fig. 1 nicht zu entnehmen ist - die in der Längsrichtung 7 verlaufenden Schienenpaare 9 über das Niveau der Schienenpaare 8 angehoben oder unter dieses abgesenkt werden.

Auf der Unterseite der Parkpaletten 4 sind je 8 - in der Fig. 1 nicht gezeigte - Rollen gelagert. Die Rollen bilden zwei zueinander senkrecht ausgerichtete Rollensätze 13 und 14, die passend zu den Schienenpaaren 8 bzw. 9 angeordnet sind. Wenn eine Parkpalette 4 sich in einer bestimmten Parkposition befindet, stehen die Rollen auf Schienen auf bzw. sind sie direkt über ihnen angeordnet. Vor jeder Verschiebung einer Parkpalette 4 muß - z.B. durch Anheben oder Absenken des unter der Parkpalette 4 befindlichen Schienenpaars 9 - dafür gesorgt werden, daß nur die Rollen Schienenkontakt haben, die dem in Richtung der gewünschten Verschieberichtung verlegten Schienenpaar zugeordnet sind.

Seitlich an den Schienen - und zwar in derselben Ausrichtung wie diese - ist je eine Stromschiene 23 oder 24 befestigt. Über diese wird der an jeder Parkpalette 4 angebrachte Motor mittels an der Parkpalette angeordneten - in der Fig. 1 nicht gezeigten - Stromabnehmern mit Strom versorgt.

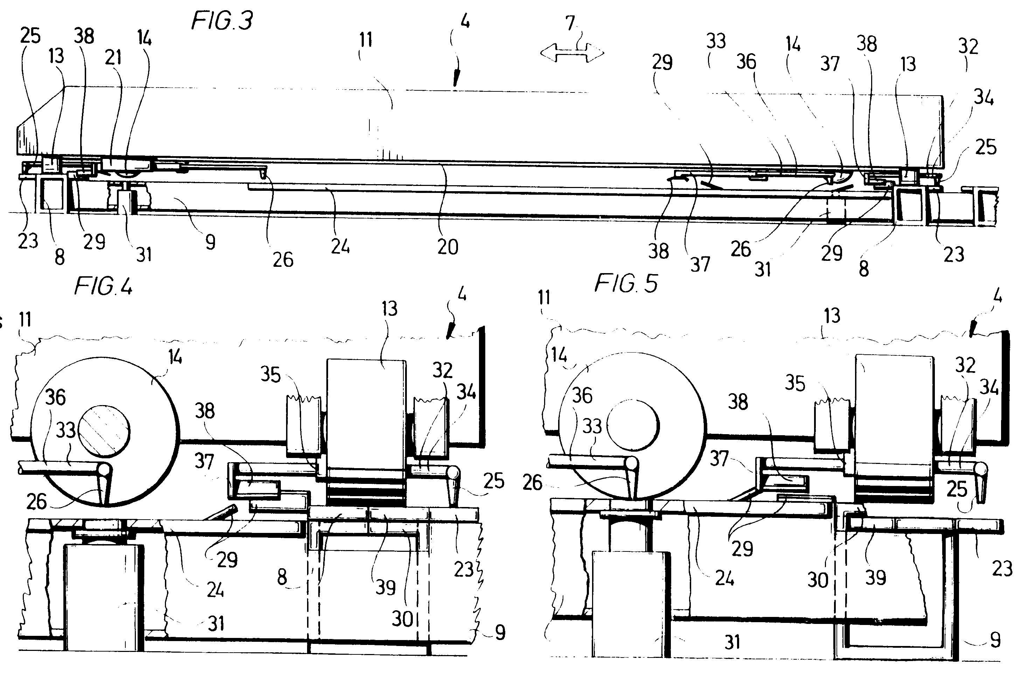

Die Parkpaletten 4, die alle identisch ausgebildet sind, haben eine so große rechteckige Grundfläche, daß alle Personenwagen gängiger Größe auf ihnen Platz finden. Die Längsachsen der Parkpaletten verlaufen parallel zur Längsrichtung 7. Die Bodenplatte 10 der Parkpaletten wird entlang ihrer Längskanten durch niedrige Wände 11 begrenzt, die mindestens an einem Ende zur Bodenplatte 10 hin abgeschrägt sind (siehe Fig. 3). An den beiden Enden in Richtung der Längsachse geht die Bodenplatte in rampenartig nach oben verlaufende Schrägen 12 mit geringer Steigung über.

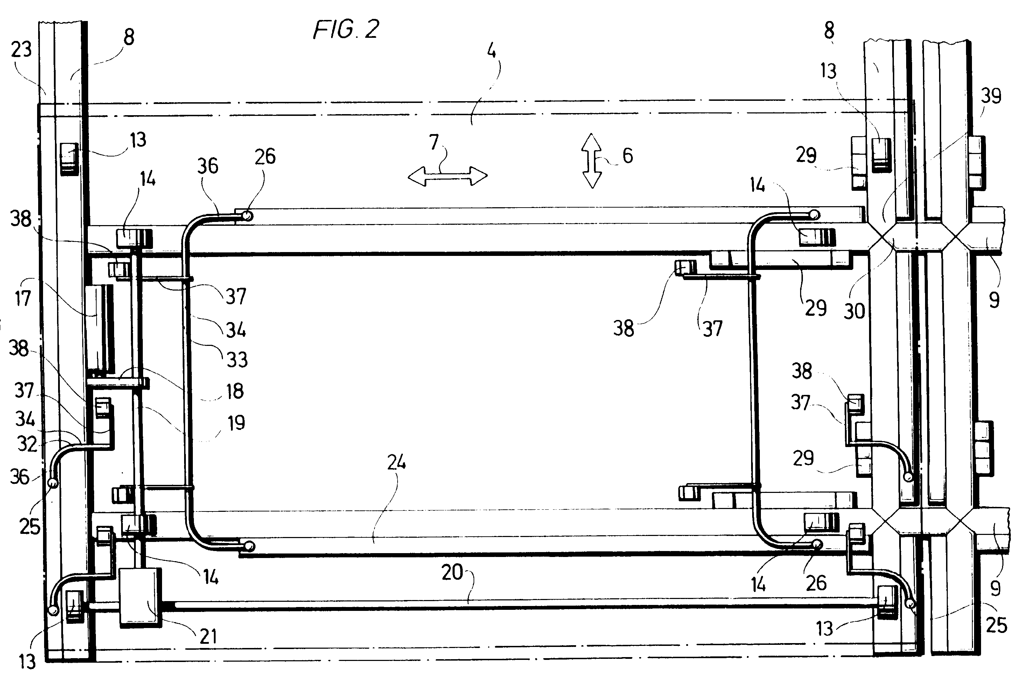

An der Unterseite der Parkpalette 4 sind - wie oben ausgeführt - die zwei Rollensätze 13 und 14 angeordnet (siehe Fig. 2). Die Achsen der zu einem Rollensatz gehörenden Rollen verlaufen parallel zueinander, wobei die Rollenachsen des einen Satzes parallel zur Längsachse der Parkpalette 4 und die Rollenachsen des anderen Satzes dazu senkrecht verlaufen. Die Rollenachsen haben einen einheitlichen Abstand von der Unterseite der Parkpalette 4. Die zu einem Satz gehörenden Rollen haben von der Längs- bzw. Querachse der Parkpalette denselben Abstand, wobei dieser Abstand beim Rollensatz 13, bei dem die Rollenachsen parallel zur Längsachse verlaufen, gleich dem halben Schienenabstand des Schienenpaars 8 und beim Rollensatz 14 gleich dem halben Schienenabstand des Schienenpaars 9 ist. Auf jeder Seite der Längs- bzw. Querachse befinden sich zwei Rollen. Zwei Rollen jedes Rollensatzes, welche drehfest auf einer Welle 19 bzw. 20 sitzen, werden mittels des Motors 17 angetrieben, welcher über ein Motorgetriebe 18 die in Querrichtung verlaufende Welle 19 antreibt, die wiederum über ein Winkelgetriebe 21 die in Längsrichtung verlaufende Welle 20 antreibt. Die angetriebenen Rollen beider Rollensätze werden damit immer gemeinsam angetrieben.

Durch Absenken oder Anheben des Schienenpaars 9 unter oder über das Niveau des fest mit dem Boden des Parkdecks 2 verbundenen Schienenpaars 8 wird dafür gesorgt, daß die Parkpalette 4 beim Verschieben immer nur auf einem Schienenpaar aufliegt und deshalb nur jeweils in einer Richtung bewegt werden kann. Das Schienenpaar 9 wird mittels hydraulischer Hebevorrichtungen 31 angehoben und abgesenkt (siehe Fig. 3 bis 6), die auf dem Boden des Parkdecks 2 stehen, auf denen die Schienenpaare 9 ruhen und von denen je vier pro Parkposition vorgesehenen sind.

Der Schienenabstand ist bei dem in der Querrichtung 7 verlaufenden Schienenpaar 8 etwas kleiner als die Länge einer Parkpalette 4 und bei dem in Längsrichtung verlaufenden Schienenpaar 9 etwas kleiner als die Breite einer Parkpalette 4. Der Abstand zwischen benachbarten Schienenpaaren 8 ist etwas größer als die Differenz zwischen der Länge einer Parkpalette 4 und dem zugehörigen Schienenabstand und der Abstand zwischen benachbarten Schienenpaaren 9 ist etwas größer als die Differenz zwischen der Breite einer Parkpalette 4 und dem zugehörigen Schienenabstand.

Im Kreuzungspunkt 30 zweier Schienen weisen diese bei einem bevorzugten Ausführungsbeispiel je zwei einander zugewandte, sich keilförmig verjüngende Laufflächen auf, deren Spitzen sich im Kreuzungspunkt fast berühren, wobei die genannten Laufflächen beider Schienen sich von oben gesehen zu einem Quadrat ergänzen. Damit wird erreicht, daß bei der Verschiebung der Parkpalette 4 über einen Kreuzungspunkt 30 hinweg trotz des unterschiedlichen Niveaus der Schienen die Rolle im Kreuzungspunkt über eine praktisch durchgehende "Brücke" rollt und keine Lücke überwinden muß (Fig. 2).

Die beschriebene Ausbildung des Kreuzungsbereiches führt dazu, daß die Lauffläche zumindest einer der beiden Schienen im Kreuzungsbereich geschwächt wird. Dies ist insbesondere dann von Nachteil, wenn die Schienen als Biegeprofil aus dünnen Blechplatten hergestellt werden, da dann die Tragfähigkeit im Kreuzungsbereich unter Umständen zu gering wird.

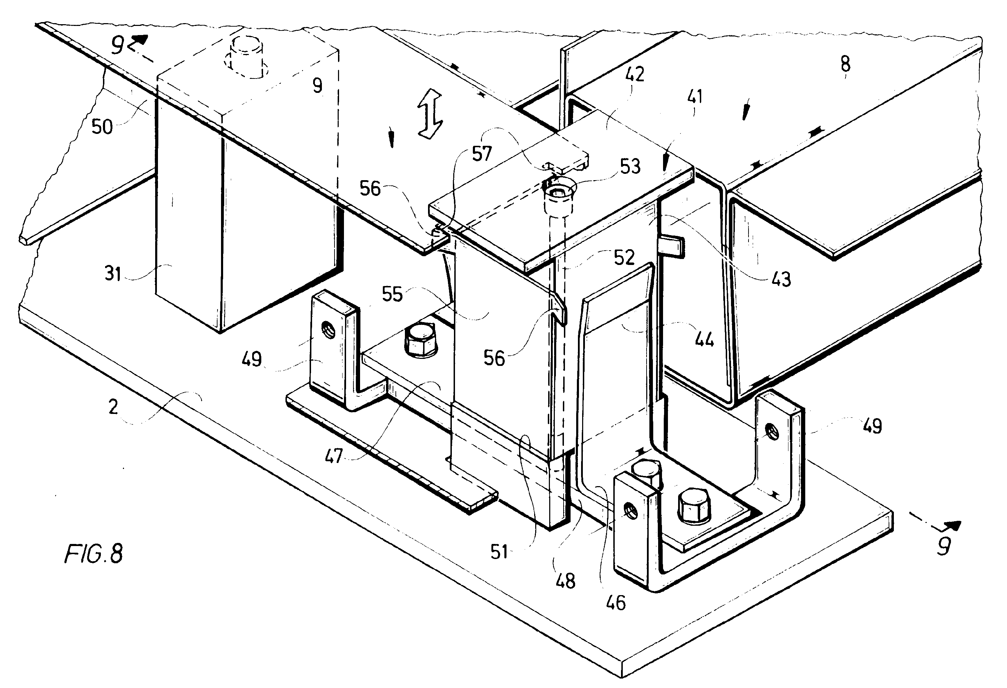

Bei dem in den Fig. 8 bis 12 beschriebenen, abgewandelten Ausführungsbeispiel wird daher ein anderer Weg beschritten, um im Kreuzungsbereich die Verbindung der Laufflächen der jeweils höher liegenden Schiene herzustellen.

Bei dieser Ausführungsform enden die nicht höhenverstellbaren, stationären Schienen des Schienenpaares 8 jeweils vor dem Kreuzungsbereich, die höhenverstellbare Schiene des Schienenpaares 9 hingegen ist in diesem Bereich durchgängig ausgebildet, wobei allerdings die Lauffläche dieser höhenverstellbaren Schiene dem Kreuzungsbereich ebenfalls unterbrochen ist, so daß sich im Kreuzungsbereich eine rechteckige Ausnehmung 40 befindet.

In der höhenverschiebbaren Schiene ist unterhalb der Ausnehmung 40 eine stempelförmige Brücke 41 angeordnet, die mit einer oberen, genau in die Ausnehmung 40 einpaßbaren Abschlußplatte 42 endet. An diese schließt sich nach unten ein im Querschnitt rechteckiger Stempel 43 an, der zwischen zwei senkrechten Wänden 44 und 45 höhenverschieblich geführt ist. Diese Wände 44 und 45 sind Teil von Winkeln 46 bzw. 47, die ihrerseits auf einer horizontalen Platte 48 festgelegt sind. Diese ist mittels U-förmiger Haltebügel 49 an den Seitenwänden 50 der höhenverschiebbaren Schiene gehalten.

Die beiden Wände 44 und 45 sind unter einer gewissen Vorspannung an den Stempel 43 angelegt, so daß diese Wände 44 und 45 den Stempel bei einer Höhenverschiebung der höhenverschiebbaren Schiene im Reibschluß mitnehmen.

Die höhenverschiebbare Schiene ist im Bereich der Brücke 41 an der Unterseite offen, so daß neben der Platte 48 zwei am Parkdeck stationär festgelegte Stützlager 51 in das Innere der höhenverschiebbaren Schiene hineinragen. Diese Stützlager 51 bilden eine Auflagefläche für den Stempel 43 der Brücke 41. Die Abmessungen sind dabei so gewählt, daß beim Ruhen des Stempels 43 auf dem Stützlager 51 die obere Abschlußplatte 42 mit der Lauffläche der nicht höhenverstellbaren, sta onären Schiene des Schienenpaares 8 ausgerichtet ist (Fig. 8).

Im Inneren des Stempels 43 ist ein Anschlagbolzen 52 angeordnet, der durch die obere Abschlußplatte 42 hindurch in ein Gewinde eingeschraubt ist, das am Parkdeck vorgesehen ist. Dieser Anschlagbolzen 52 kann mit seinem Kopf 53 an einem am Stempel 43 gehaltenen Quersteg 54 anschlagen und die Verschiebbewegung der Brücke 41 nach oben beschränken, und zwar in einer Position, in welcher die obere Abschlußplatte 42 mit der Lauffläche der höhenverstellbaren Schiene in deren oberster Position fluchtet.

Die beiden nicht an den Wänden 44 und 45 anliegenden Seitenwände des Stempels 43 tragen ihrerseits jeweils eine dünne Platte 55, die an ihrer oberen Kante zwei seitlich abstehende Lappen 56 aufweist. Diese Lapppen 56 sind gegenüber der Platte 55 schräg abgebogen, so daß sie nicht mehr durch mit der Platte 55 fluchtende Schlitze 57 in der Lauffläche der höhenverstellbaren Schiene hindurchpassen. Auf diese Weise wird die Verschiebebewegung der Brücke 41 nach oben relativ zur höhenverstellbaren Schiene begrenzt, dadurch ist die Brücke 41 unverlierbar innerhalb der höhenverstellbaren Schiene gehalten.

Die Lappen 56 werden erst nach dem Einführen der Brücke in die höhenverstellbare Schiene abgebogen, zum Einführen fluchten diese Lappen 56 mit der Platte 55, so daß sie durch die Schlitze 57 hindurchpassen.

Die Funktion der beschriebenen Anordnung im Kreuzungsbereich wird anhand der Fig. 8 bis 12 erläutert. Solange die höhenverstellbare Schiene abgesenkt ist, ruht der Stempel 43 auf dem Stützlager 51, so daß die Abschlußplatte 42 mit der Lauffläche der stationären Schiene fluchtet und die beiden Laufflächenteile zu beiden Seiten des Kreuzungsbereiches miteinander verbindet (Fig. 8).

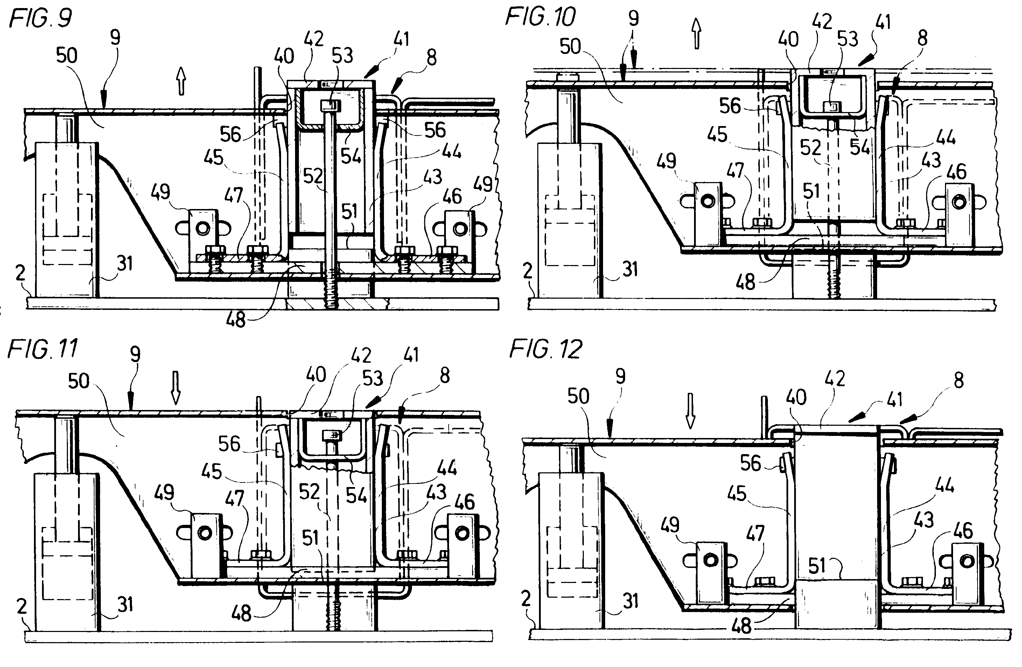

Wird die höhenverstellbare Schiene angehoben, nimmt sie aufgrund des Reibschlusses zwischen dem Stempel 43 und den Wänden 44, 45 die Brücke 41 mit nach oben (Fig. 9), wobei die Verschiebung der Brücke 41 nach oben durch den Anschlagbolzen 52 begrenzt wird. Der Anschlagbolzen 52 schlägt dann mit seinem Kopf 53 an den Quersteg 54 an, wenn die Abschlußplatte 42 in der Höhe positioniert ist, die die Lauffläche der höhenverstellbaren Schiene in deren höchster Position erreicht. Infolge des Reibschlusses zwischen den Wänden 44 und 45 und dem Stempel 43 ist die Endposition der Brücke 41 früher erreicht als die Endposition der höhenverstellbaren Schiene, diese wird anschließend bis in deren höchste Position angehoben, wobei die Brücke 41 gegenüber den Wänden 44 und 45 gleitet. Erreicht die höhenverstellbare Schiene ihre höchste Position, stützt sie den Stempel 43 der Brücke 41 mit Hilfe der Platte 48 ab, so daß die Brücke 41 stabil von der höhenverstellbaren Schiene getragen wird. In dieser Position verbindet die obere Abschlußplatte 42 die im Kreuzungsbereich unterbrochene Lauffläche der höhenverstellbaren Schiene, d.h. die Ausnehmung 40 ist durch die Abschlußplatte 42 ausgefüllt.

Beim Absenken der höhenverstellbaren Schiene nimmt diese die Brücke 41 infolge des Reibschlusses zwischen den Wänden 44 und 45 und dem Stempel 43 mit nach unten, bis die Brücke 41 mit ihrem Stempel 43 auf dem Stützlager 51 aufruht. Bei der weiteren Verschiebung der höhenverstellbaren Schiene nach unten gleitet der Stempel 43 gegenüber den Wänden 44 und 45, bis die höhenverstellbare Schiene die unterste Position erreicht hat. In dieser Position legt sich die Lauffläche der höhenverstellbaren Schiene auf die Oberkante der Platten 55 und der Lappen 56, so daß die Brücke 41 in dieser tiefsten Stellung festgelegt ist, in der die obere Abschlußplatte 42 die Laufflächen der stationären Schienen miteinander verbinden.

Aus dieser Beschreibung wird deutlich, daß der Verschiebeweg der Brücke 41 geringer ist als der Verschiebeweg der höhenverstellbaren Schiene, dieser Verschiebeweg der Brücke 41 entspricht nämlich dem Höhenunterschied zwischen den Laufflächen der stationären Schiene und der in die höchste Position verfahrenen, höhenverstellbaren Schiene. Die hohenverstellbare Schiene selbst muß hier weiterverfahren werden, da sie unter das Niveau der stationären Schiene abgesenkt werden muß. Dies gelingt dadurch, daß für die Bewegung der Brücke Mitnehmer vorgesehen sind, die diese nur über einen Teil der Verschiebebewegung der höhenverstellbaren Schiene mitnehmen, in einem anderen Teil jedoch relativ zur Brücke verschiebbar sind. In den Endlagen wird die Brücke so verriegelt, daß eine Höhenverschiebung nicht mehr möglich ist, in der angehobenen Position durch den Anschlagbolzen 52 und die Platte 48, in der abgesenkten Position durch das Stützlager 51 und die Oberkante der Platte 55 und der Lappen 56. Bei dieser Konstruktion werden die Laufflächen der jeweils obenliegenden Schiene durch die Abschlußplatte 42 stufenlos verbunden, und zwar im wesentlichen auf deren gesamter Breite, so daß eine volle Belastung im Kreuzungsbereich möglich ist. Trotzdem sind keine zusätzlichen Antriebsmechanismen für die höhenverstellbare Brücke notwendig.

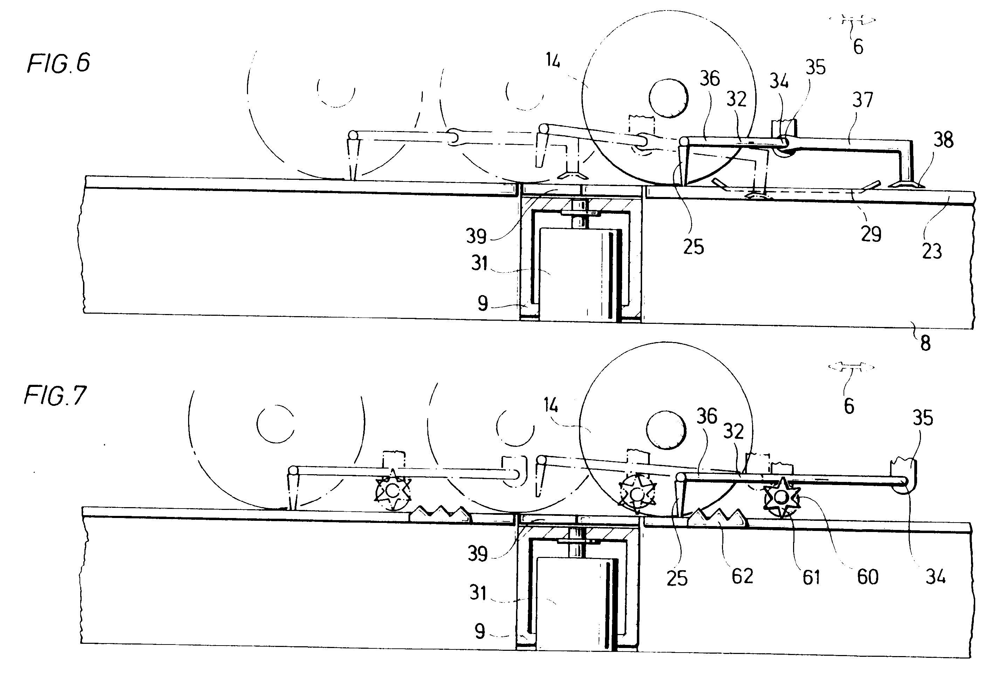

Die Stromversorgung für den Motor 17 erfolgt über die an den Schienen befestigten, an die - nicht gezeigte - Stromquelle angeschlossenen Stromschienen 23 bzw. 24 und über an der Unterseite der Parkpalette 4 befestigte Stromabnehmer 25 und 26, von denen je vier vorhanden sind. Die an der Parkpalette 4 befestigte elektrische Verbindung zwischen den Stromabnehmern 25 bzw.26 und dem Motor 17 sind - ebenso wie eine Steuerung, über welche die elektrische Verbindung verläuft - nicht gezeigt. Zu jedem Schienenpaar 8 bzw. 9 gehört ein Paar von Stromschienen 23 bzw. 24, die an der Außenseite der Schienenpaare befestigt sind und dieselbe Ausrichtung wie die zugehörigen Schienen haben. Die Stromschienen sind dort unterbrochen, wo zwei Schienen sich kreuzen. Die Stromabnehmer 25 haben alle von der Querachse der Parkpalette 4 denselben Abstand, der gleich dem halben Abstand der zum Schienenpaar 8 gehörenden Stromschienen 23 ist. Entsprechend haben die Stromabnehmer 26 von der Längsachse denselben Abstand, der gleich dem halben Abstand der zum Schienenpaar 9 gehörenden Stromschienen 24 ist. Wenn ein Rollensatz über dem zugehörigen Schienenpaar positioniert ist, sind die Stromabnehmer über den zugehörigen Stromschienen positioniert . Immer dann, wenn ein Rollensatz auf einem Schienenpaar aufsteht, ist ein leitender Kontakt zwischen den an dem Schienenpaar befestigten Stromschienen und den über ihnen positionierten Stromabnehmern vorhanden. Steht ein Rollensatz auf einem Schienenpaar auf und wird der Motor 17 eingeschaltet, dann wird die Parkpalette 4 in der Richtung, in welcher das Schienenpaar verlegt ist, verschoben. D. h., daß die Stromzuführung immer über die Stromschienen 23 oder 24 erfolgt, an denen entlang eine Verschiebung stattfindet oder anschließend stattfinden soll (siehe Fig. 4 und 5). Wird durch Anheben oder Absenken des Schienenpaars 9 der auf den Schienen aufsitzende Rollensatz und damit auch die Verschiebungsrichtung gewechselt, findet auch ein Wechsel der Stromschienen statt, von denen der Strom abgenommen wird. Die Fig. 4 und 5 veranschaulichen die genannten Wechselbeziehungen.

Nicht eindeutig ist die Situation, wenn - was während des Absenkens und Anhebens des Schienenpaars 9 jeweils für einen kurzen Moment der Fall ist - die beiden Schienenpaare 8 und 9 dasselbe Niveau haben und infolgedessen alle Rollen auf den Schienen und alle Stromabnehmer auf den Stromschienen aufstehen. Dieses Problem kann schaltungstechnisch leicht dadurch gelöst werden, daß der Motor nur dann eingeschaltet wird, wenn die Stromzufuhr nur über ein Stromschienenpaar erfolgt.

Die Stromabnehmer 25 sind an einer Halterung 32 befestigt (siehe insbesondere Fig. 2 und 6). Die Halterung 32 besteht aus e inem in einem an der Unterseite der Parkpalette 4 angebrachten Lager 35 (siehe Fig. 4 bis 6) drehbar geführten Teil 34 und einem zu diesem rechtwinklig verlaufenden Teil 36. Das gelagerte Teil 34 hat eine horizontale Ausrichtung und verläuft senkrecht zu der Stromschiene, welcher der Stromabnehmer 25 zugeordnet ist. Der Stromabnehmer 25 sitzt am Ende des abgewinkelten Teils 36. Bei einer Drehung des Teils 34 führt er infolgedessen Kreisbewegungen in einer Ebene aus, deren Normale in Richtung des gelagerten Teils 34 verläuft. Bei den Stromabnehmern 26 haben die auf einer Geraden senkrecht zu den zugehörigen Stromschienen liegenden Stromabnehmer einen geringeren Abstand voneinander als bei den Stromabnehmern 25. Infolgedessen bietet es sich an - was auch verwirklicht ist (siehe Fig. 2) - für die auf einer Geraden senkrecht zu den zugehörigen Stromschienen 24 liegenden Stromabnehmer 26 eine Halterung 33 vorzusehen, welche - anders als die Halterung 32 - U- und nicht L-förmig ausgebildet ist. Bei der Halterung 33 wird das gelagerte Teil 34 in zwei Lagern 35 geführt, und es sind zwei abgewinkelte Teile 36 vorhanden, an deren Enden Stromabnehmer 26 befestigt sind. Der abgewinkelte Teil 36 ist im wesentlichen horizontal ausgerichtet. Gehalten wird er in dieser Ausrichtung entweder dadurch, daß der Stromabnehmer auf der zugehörigen Stromschiene aufsteht, oder - wenn die Schiene und damit die Stromschiene unter das Niveau der senkrecht zu ihr verlaufenden Schiene abgesenkt ist - durch eine nicht gezeigte Sperre, die verhindert, daß der Stromabnehmer aufgrund der Schwerkraft sich zu weit nach unten bewegt und dabei die abgesenkte Stromschiene kontaktiert.

Pro Stromschiene 23 bzw. 24 sind zwei Stromabnehmer 25 bzw. 26 vorgesehen. Theoretisch würde für die Stromversorgung ein Stromabnehmer pro Stromschiene genügen. Zwei Stromabnehmer sind deshalb erforderlich, weil die Stromschienen an den Kreuzungspunkten 30 unterbrochen sind. Wäre pro Stromschiene nur ein Stromabnehmer vorhanden, würde die Stromzuführung beim Verschieben während der Zeitspanne, in der der Stromabnehmer den Kreuzungspunkt passiert, unterbrochen sein. Ein zweiter, zum ersten parallel geschalteter Stromabnehmer pro Stromschiene verhindert dies. Der Stromabnehmer, der den Kreuzungspunkt passiert, wird über die Lücke weggehoben.

Möglich wird dies mit einer an der Halterung 32 bzw. 33 befestigten Anordnung, die mit einer an den Schienen befestigten Führungsschiene 29 zusammenwirkt. Die Führungsschiene 29 ragt horizontal aus der von der Stromschiene abgewandten Seite der Schiene heraus (siehe Fig. 1, 2 und 4 - 6). Sie verläuft entlang der Seite und hat in der vertikalen, entlang der Schiene verlaufenden Ebene das Profil einer nach oben offenen flachen Wanne (siehe Fig. 1 und 6). Die Anordnung besteht aus einer drehfest mit der Halterung 32 bzw. 33 verbundenen Abzweigung 37, welche rechtwinklig vom gelagerten Teil 36 der Halterung 32 bzw. 33 absteht (siehe insbesondere Fig. 2). Die Abzweigung 37 und der abgewinkelte Teil 36 weisen im wesentlichen in entgegengesetzte Richtungen (siehe Fig. 6). Am freien Ende der Abzweigung 37 ist ein Bügel 38 befestigt. Die Abzweigung 37 ist so an der Halterung befestigt, daß wenn der Stromabnehmer 25 oder 26 über der zugehörigen Stromschiene 23 oder 24 angeordnet ist, der Bügel einen Abstand von der von der Stromschiene abgewandten Seite der Schiene hat, der geringer ist als die Abmessung der Führungsschiene 29 senkrecht zur Schiene, wobei der Bügel 38 an der der Schiene zugewandten Seite der Abzweigung 37 angebracht ist (siehe Fig. 4 und 5). Steht der an den Bügel gekoppelte Stromabnehmer auf der zugehörigen Stromschiene auf, befindet sich der obere Rand des Bügels in einer Höhe, welche etwas unterhalb des höchsten Punktes der nach unten weisenden Seite der Führungsschiene 29 liegt. Dabei ist die Länge der Abzweigung 37 und des abgewinkelten Teiles 36 und die Gewichte des Bügels 38 und des Stromabnehmers 25 oder 26 so aufeinander abgestimmt, daß der Stromabnehmer nach unten zieht.

Wie mit dieser Anordnung im Zusammenwirken mit der Führungsschiene 29 der Stromabnehmer 25 oder 26 über einen Kreuzungspunkt 30 gehoben wird, läßt sich anhand der Fig. 6 erläutern. Wird die Parkpalette 4 auf dem Schienenpaar 8 verschoben und nähert sich der auf der Stromschiene 23 aufstehende Stromabnehmer 25 einem Kreuzungspunkt, dann nähert sich der Bügel 38 der Führungsschiene 29. Dazu ist erforderlich, daß der Abstand zwischen dem von der Lücke abgewandten Beginn der Führungsschiene und dem der Führungsschiene zugewandten Beginn der Lücke etwas länger ist als die Summe der Längen von Abzweigung 37 und abgewinkeltem Teil 36. Berührt der Bügel 38 die Führungsschiene 29, wird er bei einen weiteren Verschieben entlang dem Wannenprofil geführt und damit nach unten abgelenkt. Gleichzeitig wird der Stromabnehmer 25 angehoben. Die Anhebung bleibt erhalten, solange sich der Bügel 38 entlang dem waagrechten Wannenboden bewegt. Dessen Länge muß der zu überwindenden Lücke, welche auch zwei nahe bei beieinander liegende Kreuzungspunkte 30 einschließen kann, angepaßt sein. Hat der Bügel das Ende des waagrechten Wannenbodens erreicht, wird die Ablenkung rückgängig gemacht und den Stromabnehmer 25 wird wieder auf die Stromschiene 11 abgesenkt. Wie die Figuren 3, 4 und 5 zeigen streift der Bügel 38 die Führungsschiene 29 nur dann, wenn der zugehörige Stromabnehmer auf einer Stromschiene aufsteht.

Bei der beschriebenen Konstruktion muß die Führungsschiene mindestens so lang sein, wie der Bereich, der mit angehobenem Stromabnehmer überbrückt werden soll. Bei einer in Fig. 7 dargestellten, abgewandelten Ausgestaltung der Anhebevorrichtung für den Stromabnehmer ist dies nicht notwendig. Bei dieser Ausgestaltung ist an jeder Parkpalette für jeden Stromabnehmer ein Exzenter 60 drehbar gelagert, an dem das Teil 36 des Stromabnehmers anliegt. In einer ersten Stellung des Exzenters 60 wird das Teil 36 nicht angehoben, so daß der Stromabnehmer an der Stromschiene anliegt, in einer zweiten Stellung dagegen hebt der Exzenter 60 das Teil 36 und damit den Stromabnehmer an. Die beiden Positionen des Exzenters 60 sind vorzugsweise um 180° gegeneinander versetzt, so daß jeweils nach einer halben Umdrehung des Exzenters 60 der Stromabnehmer wieder angehoben bzw. abgesenkt wird.

Zum Verdrehen des Exzenters 60 ist dieser drehfest mit einem Zahnrad 61 verbunden, das mit Zahnstangenstücken 62 kämmt, die längs des Verschiebeweges ortsfest angeordnet sind. Die Zahnstangenstücke sind dabei so lang ausgebildet, daß bei jedem Kämmen des Zahnrades mit einem Zahnstangenstück der Exzenter 60 um 180° verdreht wird, d.h. jedes Kämmen mit einem Zahnstangenstück führt zu einer Umschaltung der Stromabnehmerposition.

Vorteilhaft ist bei dieser Lösung vor allen Dingen, daß über beliebig lange Wegstücke der Stromabnehmer angehoben, bzw. abgesenkt sein kann, die für die Umschaltung notwendigen Zahnstangenstücke können dagegen außerordentlich kurz ausgebildet sein. Es genügt nämlich, wenn durch die Zahnstangenstücke eine einmalige Verdrehung des Exzenters um 180° erfolgt.

Selbstverständlich können anstelle der Zahnstangenstücke und des mit ihnen kämmenden Zahnrades auch andere Betätigungsglieder zum Anheben des Stromabnehmers und Eingriffselemente zum Aktivieren des Betätigungsgliedes verwendet werden, beispielsweise Schaltnocken etc. Wesentlich ist, daß ein ortsfestes Eingriffselement bei der Bewegung der Palette längs der Verschiebebahn die Anhebevorrichtung für den Stromabnehmer abwechselnd aktiviert, bzw. desaktiviert, wobei die Aktivierung und Desaktivierung an den Stellen erfolgt, an denen ein Anheben bzw. ein Absenken des Stromabnehmers gewünscht ist.

Beim Einparken eines Automobils in eine bestimmte Parkposition im Flurparker 1, z.B. in die in der Figur 1 dem Aufzug diagonal gegenüberliegende Parkposition auf dem Parkdeck 2, ist der Ablauf der folgende:

Zunächst ist anzumerken, daß es eine Voraussetzung für das Verschieben einer Parkpalette 4 auf einem Parkdeck ist, daß nicht alle Parkpositionen mit Parkpaletten belegt sind.

Das Automobil wird auf eine im Aufzug auf Straßenniveau stehende Parkpalette 4 gefahren. Nachdem z.B. mittels Lichtschranken festgestellt worden ist, daß es in der richtigen, bevorzugt mittigen Position auf der Parkpalette 4 steht, wird diese nach unten auf das Niveau des Parkdecks 2 gefahren. Im nächsten Schritt soll die im Aufzug stehende Parkpalette 4 in die freie Parkposition hinten links (siehe Figur 1) verschoben werden. Dafür sind auf den Boden des Aufzugs zwei sich kreuzende Schienenpaare 8 und 9 vorhanden, welche mit den entsprechenden Schienenpaaren auf dem Parkdeck fluchten. Für den Verschiebungsschritt ist es erforderlich, daß das Schienenpaar 9 im Aufzug und in der freien Parkposition über das Niveau des Schienenpaars 8 angehoben ist, damit der Rollensatz 14 auf dem Schienenpaar 9 aufliegt. Bei dieser Schienenstellung stehen die Stromabnehmer 26 auf den am Schienenpaar 9 befestigten Stromschienen 24 auf. Nun kann die Parkpalette 4 mit dem Automobil in die Längsrichtung 7 zu der Parkposition hinten links verschoben werden. Ein mitfahrender - in den Figuren nicht gezeigter - Indikator zeigt jeweils an, wenn die Parkpalette 4 auf einer Parkposition steht. Mindestens zehn weitere Verschiebeoperationen sind erforderlich, um die Parkpalette mit dem Automobil in die vordere linke Parkposition zu bringen. An den Verschiebeoperationen sind die Parkpalette 4 mit dem Automobil, die beiden anderen auf der linken Seite und die drei hinteren auf der rechten Seite des Parkdecks positionierten Parkpaletten 4 beteiligt. Vor jeder Änderung der Verschieberichtung muß das Schienenpaar 9 angehoben oder abgesenkt werden, wodurch gleichzeitig die stromführenden Stromabnehmner gewechselt werden.

Das Ein- und Ausparken erfolgt bevorzugt programmgesteuert über einen Computer, um das Einparken in Bezug auf die Anzahl der Verschiebungsoperationen und die Anzahl der Anhebungen bzw. der Absenkungen des Schienenpaars 9 im Hinblick auf ein möglichst zeitsparendes Einparken zu optimieren.

## Patentansprüche

1. Flurparker für Kraftfahrzeuge mit einer Anzahl von Park paletten, die auf senkrecht zueinander gerichteten, in einer Ebene angeordneten Fahrbahnen verschiebbar sind und jeweils einen eigenen Antrieb aufweisen, der die Parkpaletten bewegende Rollen antreibt,
**dadurch gekennzeichnet,**
daß der Antrieb (17) gleichzeitig Rollen (13, 14) für senkrecht zueinander angeordnete Fahrtrichtungen antreibt und daß längs der Fahrbahnen Schienen (8, 9) angeordnet sind, die wahlweise mit den Rollen (13, 14) der einen oder der anderen, senkrecht dazu verlaufenden Fahrtrichtung in Eingriff bewegbar sind.

2. Flurparker nach Anspruch 1, dadurch gekennzeichnet, daß die Rollen (13, 14) die Parkpaletten (4) tragen und daß die Rollen (13, 14) jeweils einer Fahrtrichtung auf den Schienen (8, 9) dieser Fahrtrichtung aufsitzen.

3. Flurparker nach Anspruch 2, dadurch gekennzeichnet, daß die Schienen (8, 9) einer Fahrtrichtung gegenüber den Schienen (9, 8) der senkrecht dazu verlaufenden Fahrtrichtung über deren Lauffläche anhebbar und unter deren Lauffläche absenkbar sind.

4. Flurparker nach Anspruch 3, dadurch gekennzeichnet, daß mindestens eine von zwei sich kreuzenden Schienen (8, 9) im Kreuzungsbereich eine Einschnürung der Lauffläche aufweist, in welche die andere Schiene (9, 8) hineinragt, und daß zumindest die hineinragende Schiene (9, 8) im Kreuzungsbereich unterbrochen ist.

5. Flurparker nach Anspruch 4, dadurch gekennzeichnet, daß beide Schienen (8, 9) im Kreuzungsbereich unterbrochen sind und in Richtung auf den Kreuzungspunkt (30) sich keilförmig verjüngende Lauffläche aufweisen, wobei die Spitzen der Laufflächen bis an den Kreuzungspunkt (30) heranreichen.

6. Flurparker nach einem der Ansprüche 1 bis 3, dadurch gekennzeichnet, daß die Laufflächen von zwei sich kreuzenden Schienen jeweils vor dem Kreuzungspunkt (30) enden und daß im Kreuzungsbereich eine höhenverstellbare Brücke (41) angeordnet, die jeweils auf das Niveau der Lauffläche der höher positionierten der beiden sich kreuzenden Schienen verschoben ist.

7. Flurparker nach Anspruch 6, dadurch gekennzeichnet, daß die höhenverschiebbare Schiene Mitnehmer (44, 45; 48) zur Höhenverstellung der Brücke (41) aufweist.

8. Flurparker nach Anspruch 7, dadurch gekennzeichnet, daß die Mitnehmer (48) zum Anheben der Brücke (41) an dieser nur anliegen, wenn die höhenverstellbare Schiene mit ihrer Lauffläche auf dem Niveau der Lauffläche der kreuzenden Schiene oder darüber positioniert ist.

9. Flurparker nach einem der Ansprüche 6 bis 8, dadurch gekennzeichnet, daß die Brücke (41) in ihrer tiefsten Stellung auf einem Stützlager (51) aufruht.

10. Flurpark nach einem der Ansprüche 7 bis 9, dadurch gekennzeichnet, daß die Brücke (41) in der höhenverstellbaren Schiene höhenverschieblich in einer Reibschlußführung gelagert ist.

11. Flurparker nach Anspruch 10, dadurch gekennzeichnet, daß Endanschläge (52, 53, 54; 55, 56,) zur Begrenzung der Verschiebung der Brücke 41 gegenüber der höhenverstellbaren Schiene vorgesehen sind.

12. Flurparker nach einem der voranstehenden Ansprüche, dadurch gekennzeichnet, daß parallel zu den Schienen (8, 9) Stromschienen (23, 24) verlaufen, an denen mindestens ein an jeder Parkpalette (4) gehaltener Stromabnehmer (25, 26) anliegt.

13. Flurparker nach Anspruch 12, dadurch gekenn ichnet, daß die Stromschienen (23, 24) im Kreuzungsbereich mit den Schienen (8, 9) unterbrochen sind und daß Hebevorrichtungen vorgesehen sind, die die Stromabnehmer (25, 26) an diesen Unterbrechungen von der Stromschiene (23, 24) abheben und danach wieder auf die Stromschiene (23, 24) aufsetzen.

14. Flurparker nach Anspruch 13, dadurch gekennzeichnet, daß die Hebevorrichtungen ortsfeste Führungen (29) sind, an denen die Stromabnehmer (25, 26) der Parkpaletten (4) beim Verschieben zumindest während eines Teils des Verschiebeweges anliegen.

15. Flurparker nach Anspruch 13, dadurch gekennzeichnet, daß die Hebevorrichtungen an den Paletten (4) zwischen einer Absenkposition und einer Anhebeposition dauerhaft verstellbar sind und ein Betätigungsglied (61) für die Verstellung aufweisen, welches durch die Verschiebebewegung der Palette (4) längs ein ortsfestes Eingriffselementes (62) aktivierbar ist.

16. Flurparker nach Anspruch 15, dadurch gekennzeichnet, daß die Hebevorrichtung ein drehbar an der Parkpalette (4) gelagerter Exzenter (60), das Betätigungsglied ein den Exzenter (60) verdrehendes Zahnrad (61) und das Eingriffselement ein ortsfestes Zahnstangenstück (62) ist, das bei jedem Eingriff des Zahnrades (61) den Exzenter (60) von einer Extremstellung in eine andere verdreht.

17. Flurparker nach einem der Ansprüche 13 bis 16, dadurch gekennzeichnet, daß jede Parkpalette (4) mindestens zwei an derselben Stromschiene (23, 24) anliegende Stromabnehmer (25, 26) aufweist, deren Abstand voneinander größer ist als die Unterbrechung der Stromschienen (23, 24) im Kreuzungsbereich mit einer Schiene (8, 9).

18. Flurparker nach einem der Ansprüche 12 bis 17, dadurch gekennzeichnet, daß den Stromschienen (23, 24) der beiden senkrecht zueinander laufenden Fahrtrichtungen verschiedene Stromabnehmer (25, 26) an jeder Parkpalette (4) zugeordnet sind und daß die Stromschienen (23, 24) zusammen mit den parallelen Fahrschienen (8, 9) wahlweise mit den Stromabnehmern (25, 26) der einen oder der anderen Fahrtrichtung in Eingriff bringbar sind.

19. Flurparker nach Anspruch 18, dadurch gekennzeichnet, daß mit den anhebbaren und den absenkbaren Schienen (9) parallel laufende Stromschienen (24) fest verbunden sind.

## Claims

1. A parking system for motor vehicles, having a number of parking pallets which are displaceable on tracks arranged perpendicular to each other in one plane and which each have their own drive unit driving rollers which move the parking pallets, characterised in that the drive unit (17) simultaneously drives rollers (13, 14) for mutually perpendicular directions of travel, and in that rails (8, 9) are arranged along the tracks and can selectively be brought into engagement with the rollers (13, 14) for either one or the other of the mutually perpendicular directions of travel.

2. A parking system according to claim 1, characterised in that the rollers (13, 14) carry the parking pallets (4) and in that the rollers (13, 14) for each respective direction of travel rest on the rails (8, 9) for this direction of travel.

3. A parking system according to claim 2, characterised in that the rails (8, 9) for one direction of travel can be raised above and lowered below the running surface of the rails (9, 8) for the direction of travel perpendicular thereto.

4. A parking system according to claim 3, characterised in that at least one of two intersecting rails (8, 9) has a constriction of the running surface in the region of the intersection, the other rail (9, 8) projecting into the said constriction, and in that at least the projecting rail (9, 8) is discontinuous in the intersection region.

5. A parking system according to claim 4, characterised in that both rails (8, 9) are discontinuous in the intersection region and have running surfaces tapering in the shape of a V towards the point of intersection (30), the tips of the running surfaces extending as far as the point of intersection (30).

6. A parking system according to any one of claims 1 to 3, characterised in that the running surfaces of two intersecting rails each end before the point of intersection (30), and in that a vertically adjustable bridge (41) is arranged in the intersection region and is moved to the level of the running surface of the higher positioned of the two intersecting rails.

7. A parking system according to claim 6, characterised in that the vertically displaceable rail has carriers (44, 45; 48) for the vertical adjustment of the bridge (41).

8. A parking system according to claim 7, characterised in that the carriers (48) for raising the bridge (41) only rest against the said bridge (41) when the running surface of the vertically adjustable rail is positioned at the level of the running surface of the intersecting rail or thereabove.

9. A parking system according to any one of claims 6 to 8, characterised in that the bridge (41) rests on a step bearing (51) in its lowest position.

10. A parking system according to any one of claims 7 to 9, characterised in that the bridge (41) in the vertically adjustable rail is mounted so as to be vertically displaceable in a frictional-engagement guide.

11. A parking system according to claim 10, characterised in that end stops (52, 53, 54; 55, 56) are provided for limiting the displacement of the bridge (41) in relation to the vertically adjustable rail.

12. A parking system according to any one of the preceding claims, characterised in that contact rails (23, 24) extend parallel to the rails (8, 9), at least one current collector (25, 26), fixed to each parking pallet (4), resting against the said contact rails (23, 24).

13. A parking system according to claim 12, characterised in that the contact rails (23, 24) are interrupted by the rails (8, 9) in the intersection region, and in that lifting devices are provided which lift the current collectors (25, 26) from the contact rail (23, 24) at these interruptions and thereafter place them back on the contact rail (23, 24).

14. A parking system according to claim 13, characterised in that the lifting devices are fixed guides (29), against which the current collectors (25, 26) of the parking pallets (4) rest during displacement along at least part of the displacement path.

15. A parking system according to claim 13, characterised in that the lifting devices on the pallets (4) are continuously adjustable between a lowered position and a raised position and have an actuating member (61) for the adjustment, the said actuating member (61) being activatable by the displacement movement of the pallet (4) along a fixed engagement element (62).

16. A parking system according to claim 15, characterised in that the lifting device is an eccentric (60) rotatably mounted on the parking pallet (4), the actuating member is a gearwheel (61) turning the eccentric (60) and the engagement element is a fixed rack component (62) which turns the eccentric (60) from one extreme position into another each time the gearwheel (61) engages.

17. A parking system according to any one of claims 13 to 16, characterised in that each parking pallet (4) has at least two current collectors (25, 26) resting against the same contact rail (23, 24), the distance between the said current collectors (25, 26) being greater than the interruption of the contact rails (23, 24) by a rail (8, 9) in the intersection region.

18. A parking system according to any one of claims 12 to 17, characterised in that different current collectors (25, 26) on each parking pallet (4) are associated with the contact rails (23, 24) for the two mutually perpendicular directions of travel, and in that the contact rails (23, 24) together with the parallel rails (8, 9) can selectively be brought into engagement with the current collectors (25, 26) for either one or the other direction of travel.

19. A parking system according to claim 18, characterised in that parallel contact rails (24) are fixed to the raisable and lowerable rails (9).

## Revendications

1. Système de parcage au sol pour des véhicules automobiles, avec un certain nombre de palettes de parcage, qui sont susceptibles d'être translatées sur des voies de roulement, orientées perpendiculaires les unes aux autres, agencées dans un plan, et, chaque fois, présentent un entraînement propre, qui entraîne des galets mouvant les palettes de parcage, caractérisé en ce que l'entraînement (17) entraîne en même temps des galets (13, 14) pour des sens de marche agencés perpendiculaires l'un à l'autre, et en ce que le long des voies de roulement, des rails (8, 9) sont agencés, qui, au choix, sont susceptibles d'être amenés en prise avec les galets (13, 14) de l'un ou de l'autre des sens de marche s'étendant perpendiculaires à eux.

2. Système de parcage au sol selon la revendication 1, caractérisé en ce que les galets (13, 14) portent les palettes de parcage (4), et en ce que les galets (13, 14), chaque fois, à un sens de marche, prennent place sur les rails (8, 9) de ce sens de marche.

3. Système de parcage au sol selon la revendication 2, caractérisé en ce que les rails (8, 9) d'un sens de marche, par rapport aux rails (9, 8) du sens de marche s'étendant perpendiculaire à celui-ci, sont susceptibles d'être soulevés au-dessus de la surface de roulement de ceux-ci et sont susceptibles d'être abaissés au-dessous de la surface de roulement de ceux-ci.

4. Système de parcage au sol selon la revendication 3, caractérisé en ce qu'au moins un de deux rails (8, 9) se croisant, dans la région de croisement, présente un rétrécissement de la surface de roulement, dans lequel, l'autre rail (9, 8) fait saillie en pénétrant, et en ce qu'au moins le rail (9, 8) saillant intérieurement, dans la région de croisement, est interrompu.

5. Système de parcage au sol selon la revendication 4, caractérisé en ce que les deux rails (8, 9), dans la région de croisement, sont interrompus, et présentent, en direction du point de croisement (30), des surfaces de roulement se réduisant en forme de coin, les pointes des surfaces de roulement parvenant jusqu'au point de croisement (30).

6. Système de parcage au sol selon une des revendications 1 à 3, caractérisé en ce que les surfaces de roulement de deux rails se croisant se terminent, chaque fois, avant le point de croisement (30), et en ce que, dans la région de croisement, un pont (41) susceptible d'être déplacé en hauteur est agencé, qui, chaque fois, est translaté au niveau de la surface de roulement du rail positionné le plus haut des deux rails se croisant.

7. Système de parcage au sol selon la revendication 6, caractérisé en ce que le rail susceptible d'être translaté en hauteur présente des éléments d'entraînement (44, 45 ; 48) pour le déplacement en hauteur du pont (41).

8. Système de parcage au sol selon la revendication 7, caractérisé en ce que les éléments d'entraînement (48) pour le soulèvement du pont (41) adhèrent seulement à celui-ci lorsque le rail susceptible d'être déplacé en hauteur est positionné, avec sa surface de roulement, au niveau de la surface de roulement du rail croisant, ou au-dessus de celui-ci.

9. Système de parcage au sol selon une des revendications 6 à 8, caractérisé en ce que le pont (41), dans sa position la plus profonde, repose sur un support d'appui (51).

10. Système de parcage au sol selon une des revendications 7 à 9, caractérisé en ce que le pont (41) est logé dans un guidage à association par friction, translatable en hauteur, dans le rail susceptible d'être déplacé en hauteur.

11. Système de parcage au sol selon la revendication 10, caractérisé en ce que des butées d'extrémité (52, 53, 54 ; 55, 56) sont prévues, pour la limitation de la translation du pont (41) vis-à-vis du rail susceptible d'être déplacé en hauteur.

12. Système de parcage au sol selon une des précédentes revendications, caractérisé en ce que, parallèles aux rails (8, 9), s'étendent des rails de courant (23, 24), auxquels adhère au moins un élément de prélèvement de courant (25, 26) maintenu à chaque palette de parcage (4).

13. Système de parcage au sol selon la revendication 12, caractérisé en ce que les rails de courant (23, 24) sont interrompus dans la région de croisement avec les rails (8, 9), et en ce que des dispositifs de levage sont prévus, qui, à ces interruptions, soulèvent les éléments de prélèvement de courant (25, 26) des rails de courant (23, 24), et, après cela, leur font prendre place à nouveau sur les rails de courant (23, 24).

14. Système de parcage au sol selon la revendication 13, caractérisé en ce que les dispositifs de levage sont des guidages (29) fixes en emplacement, auxquels, les éléments de prélèvement de courant (25, 26) des palettes de parcage (4) adhèrent, lors de la translation, au moins pendant une partie du trajet de translation.

15. Système de parcage au sol selon la revendication 13, caractérisé en ce que les dispositifs de levage, aux palettes (4), sont susceptibles d'être déplacés en permanence, entre une position abaissée et une position soulevée, et présentent un organe d'actionnement (61) pour le déplacement, lequel est susceptible d'être activé par le mouvement de translation de la palette (4) le long d'un élément de venue en prise (62) fixe en emplacement.

16. Système de parcage au sol selon la revendication 15, caractérisé en ce que le dispositif de levage est un excentrique (60), logé en étant susceptible d'être tourné à la palette de parcage (4), l'organe d'actionnement est une roue dentée (61), tournant l'excentrique (60), et l'élément de venue en prise est un morceau de crémaillère (62) fixe en emplacement, qui, lors de chaque venue en prise de la roue dentée (61), tourne l'excentrique (60) d'une position extrême dans une autre.

17. Système de parcage au sol selon une des revendications 13 à 16, caractérisé en ce que chaque palette de parcage (4) présente au moins deux éléments de prélèvement de courant (25, 26) adhérant au même rail de courant (23, 24), dont l'espacement l'un de l'autre est plus grand que l'interruption des rails de courant (23, 24) dans la région de croisement avec un rail (8, 9).

18. Système de parcage au sol selon une des revendications 12 à 17, caractérisé en ce qu'aux rails de courant (23, 24) des deux sens de marche s'étendant perpendiculaires l'un à l'autre, différents éléments de prélèvement de courant (25, 26) sont associés à chaque palette de parcage (4), et en ce que les rails de courant (23, 24), ensemble avec les rails de roulement (8, 9) parallèles, au choix, sont amenables en prise avec les éléments de prélèvement de courant (25, 26) de l'un ou de l'autre sens de marche.

19. Système de parcage au sol selon la revendication 18, caractérisé en ce que des rails de courant (24), s'étendant parallèles, sont reliés fixes avec les rails (9) susceptibles d'être soulevés et les rails (9) susceptibles d'être abaissés.
